# EUROPÄISCHE PATENTANMELDUNG

(11) **EP 2 343 471 A1**
(43) Veröffentlichungstag der Anmeldung: **13.07.2011**
(21) Anmeldenummer: 10150197.1
(22) Anmeldetag: 07.01.2010
(51) Int. Cl.: F16L 59/04, F16L 59/14, E04B 1/94, E04C 2/292

(54) **Feuerwiderstehende Wandung sowie Verfahren zu deren Herstellung**

(71) Anmelder: Entfellner, Josef, 83128 Halfing (DE); Thale, Franz-Josef, 49809 Lingen (DE)
(72) Erfinder: Entfellner, Josef, 83128 Halfing (DE); Thale, Franz-Josef, 49809 Lingen (DE)
(74) Vertreter: Engel, Christoph Klaus

(57) **Zusammenfassung**

Die vorliegende Erfindung betrifft eine feuerwiderstehende Wandung, beispielsweise in Form eines feuerwiderstehenden Hohlkörpers, wie z. B. ein Rohr einer Rauchgasabführungseinrichtung, welches bei Temperaturen von bis zu 1.100 °C einsetzbar ist. Im Weiteren betrifft die Erfindung ein Verfahren zur Herstellung einer feuerwiderstehenden Wandung. Die erfindungsgemäße feuerwiderstehende Wandung umfasst zunächst eine Außenwand (01) und eine gegenüber der Außenwand angeordnete Innenwand (02). Die Innenwand (02) begrenzt einen Raum, beispielsweise einen Innenraum zur Weiterleitung von Gasen, wie der Luft in einer Lüftungsanlage oder dem Rauchgas in einer Rauchgasabführungseinrichtung. Zwischen der Außenwand (01) und der Innenwand (01) ist ein Zwischenraum (03) ausgebildet. In dem Zwischenraum (03) sind Elemente aus einem Leichtzuschlagstoff angeordnet. Der Leichtzuschlagstoff ist durch Blähglas, Blähton oder/und thermisch vorexpandiertes Perlit gebildet. Die Elemente des Leichtzuschlagstoffes sind durch ein ausgehärtetes anorganisches Bindemittel fest miteinander verbunden. Weiterhin sind die Elemente des Leichtzuschlagstoffes durch das ausgehärtete anorganische Bindemittel fest mit der Innenwand (02) und mit der Außenwand (01) verbunden.

## Beschreibung

Die vorliegende Erfindung betrifft eine feuerwiderstehende Wandung, beispielsweise in Form eines feuerwiderstehenden Hohlkörpers, wie z. B. ein Rohr einer Rauchgasabführungseinrichtung, welches bei Temperaturen von bis zu 1.100 °C einsetzbar ist. Im Weiteren betrifft die Erfindung ein Verfahren zur Herstellung einer feuerwiderstehenden Wandung.

Die DE 100 20 955 A1 zeigt einen Formkörper, welcher ausschließlich durch miteinander versinterte Leichtzuschlagstoffe, ausgewählt aus Blähglasgranulat, Blähtongranulat und thermisch vorexpandierten Perliten gebildet ist. Das Sintern erfolgt bei Temperaturen zwischen 650 °C und 750 °C, sodass der dadurch entstehende Formkörper für einen Einsatz bei höheren Temperaturen von beispielsweise mehr als 1.000 °C nicht geeignet ist.

Aus der EP 0 661 240 B1 sind ein Schaumglasgranulat und ein Verfahren zu dessen Herstellung bekannt. Bei diesem Verfahren wird gemahlenes Recyclingglas mit verschiedenen Oxiden, wie beispielsweise SiO₂, Na_{2O}, Al₂O₃ vermengt. Der Anteil der Alkalioxide Na₂O und K₂O ist auf 15 % begrenzt. Eine Verwendung des auch als Blähglasgranulat bezeichneten Schaumglasgranulates wird nicht aufgezeigt.

Die DE 10 2008 016 719 A1 zeigt die Verwendung eines anorganischen Bindemittels, welches durch Wasserglas gebildet ist, wobei der Anteil der Wasserglases im Bindemittel 2 bis 99 Gew.-% beträgt. Das Bindemittel kann zur Herstellung von transparenten Werkstoffen, beispielsweise auf der Basis von Glasmehl verwendet werden.

Aus der DE 10 2006 028 398 A1 ist ein Baustoff für brandschutztechnische Bauteile bekannt, welcher ein Bindemittel aus Natriumsilikat und/oder Kaliumsilikat sowie Olivinmehl und Talkum und/oder Caolin als Füllstoff enthält. In dem Baustoff kann weiterhin Blähglasgranulat zur Reduktion des spezifischen Gewichts enthalten sein. Der Baustoff wird bevorzugt zu Trägerplatten verarbeitet, die u. a. als Lüftungskanal-Feuerschutz-Bekleidungen verwendet werden können. Insofern der Baustoff Blähglasgranulat enthält, so nimmt die Trägerplatte eine nicht unwesentliche Menge an Wasser auf, welches die Masse der Trägerplatte und das Risiko eines Schimmelbefalls erhöht.

Die DE 10 2006 057 550 A1 zeigt eine Brandschutzeinrichtung für eine nicht brennbare Rohrleitung, die bevorzugt als Ringkörper aus einem aufschäumenden Brandschutzmaterial ausgebildet ist. Die Innenseite des Ringkörpers ist mit einer Folie abgedeckt, um Einflüsse des zu transportierenden Abwassers auf das Material zu verhindern. Im Brandfall schäumt das Brandschutzmaterial auf, um ein Hindurchtreten von Gasen zu verhindern.

Die DE 40 17 702 A1 zeigt ein Kunststoffmantelrohr für Fernwärmerohrleitungen, bei welchem zur Erhöhung der Druckfestigkeit einer Isolierschicht ein granulatförmiges Blähglas oder ein granulatförmiger Blähton zwischen einem Innenrohr und einem Außenrohr vorgesehen ist. Die Isolierschicht ist bevorzugt aus PUR-Schaum gebildet, welcher das granulatförmige Blähglas bindet. Das Kunststoffmantelrohr ist für Fernwärmeleitungen vorgesehen, in denen Wasser mit einer Temperatur zwischen 50 °C und 130 °C transportiert wird.

Die Aufgabe der vorliegenden Erfindung besteht ausgehend vom Stand der Technik darin, Lüftungsanlagen, Rauchgasabführungseinrichtungen und ähnliche Anlagen, aber auch Gehäuse und Raumbegrenzungen sowie Wandungen im Allgemeinen aufwandsarm mit einem hoch wirksamen Brandschutz zu versehen, ohne dafür schwere oder wasseraufnehmende Materialien verwenden zu müssen.

Die genannte Aufgabe wird durch eine feuerwiderstehende Wandung gemäß dem beigefügten Anspruch 1 gelöst, mit welcher derartige Anlagen, Gehäuse und Raumbegrenzungen aufgebaut werden können. Die Aufgabe wird weiterhin durch ein Verfahren zur Herstellung einer feuerwiderstehenden Wandung gemäß dem beigefügten nebengeordneten Anspruch 14 gelöst.

Die erfindungsgemäße feuerwiderstehende Wandung kann beispielsweise als Hohlkörper zur Weiterleitung von Gasen wie z. B. ein Rohr oder ein Kanal ausgebildet sein. Die erfindungsgemäße feuerwiderstehende Wandung kann aber auch durch ein Gehäuse oder durch eine Raumbegrenzung in Form einer Wand oder in Form eines Wandsegmentes gebildet sein. Die feuerwiderstehende Eigenschaft der Wandung besteht darin, dass die Wandung nicht oder nur schwer brennbar ist. Weiterhin weist sie eine geringe Wärmeleitfähigkeit zwischen Innen- und Außenseite auf, sodass Wärme nur in einem geringen Maß nach außerhalb bzw. in den von der Wandung begrenzten Raum geführt wird, wodurch ein großer Temperaturunterschied zwischen der Innen- und Außenseite möglich ist. Je nach Ausführung der erfindungsgemäßen feuerwiderstehenden Wandung erfüllt sie verschiedene brandschutztechnische Anforderungen, beispielsweise eine Temperaturbeständigkeit von 1.100 °C oder mehr. Die erfindungsgemäße feuerwiderstehende Wandung umfasst zunächst eine Außenwand und eine gegenüber der Außenwand angeordnete Innenwand. Die Innenwand begrenzt einen Raum, beispielsweise einen Innenraum zur Weiterleitung von Gasen, wie der Luft in einer Lüftungsanlage oder dem Rauchgas in einer Rauchgasabführungseinrichtung. Zwischen der Außenwand und der Innenwand ist ein Zwischenraum ausgebildet. Die Innenwand ist bevorzugt vollständig von dem Zwischenraum bedeckt bzw. eingeschlossen. In dem Zwischenraum sind Elemente aus einem Leichtzuschlagstoff angeordnet. Der Leichtzuschlagstoff ist durch Blähglas, Blähton oder/und thermisch vorexpandiertes Perlit gebildet. Die Elemente können beispielsweise durch Kugeln, Kiesel, Bruchstücke, Körner, Würfel oder Späne gebildet sein. Die Elemente des Leichtzuschlagstoffes sind durch ein ausgehärtetes anorganisches Bindemittel fest miteinander verbunden. Weiterhin sind die Elemente des Leichtzuschlagstoffes durch das ausgehärtete anorganische Bindemittel fest mit der Innenwand und mit der Außenwand verbunden. Folglich bilden die Innenwand, die Außenwand und die Elemente des Leichtzuschlagstoffes eine fest verbundene Einheit aus, in welcher das ausgehärtete anorganische Bindemittel für eine feste mechanische Verbindung zwischen den einzelnen Elementen des Leichtzuschlagstoffes sowie zwischen den an der Innenwand befindlichen Elementen des Leichtzuschlagstoffes und der Innenwand sowie zwischen den an der Außenwand befindlichen Elementen des Leichtzuschlagstoffes und der Außenwand sorgt.

Ein besonderer Vorteil der erfindungsgemäßen feuerwiderstehenden Wandung besteht darin, dass sie einerseits aufgrund des Leichtzuschlagstoffes leicht ausgeführt werden kann und andererseits durch die Innenwand die Wirkung einer erhöhten Wasseraufnahme des Leichtzuschlagstoffes verhindert ist. Ein weiterer Vorteil der erfindungsgemäßen feuerwiderstehenden Wandung besteht darin, dass sie im Rahmen einer Vorfertigung beispielsweise in Form von Rohrstücken oder Installationspaneelen bereitstellbar ist. Die vorgefertigte feuerwiderstehende Wandung kann zu ihrem Einbauort, beispielsweise zu einem im Bau befindlichen Gebäude geliefert werden. Der gebundene Leichtzuschlagsstoff erfordert keine Bearbeitung auf der Baustelle.

Bei einer bevorzugten Ausführungsform der erfindungsgemäßen feuerwiderstehenden Wandung sind die Elemente aus dem Leichtzuschlagsstoff durch Blähglaselemente gebildet. Blähglaselemente, beispielsweise in Form von Blähglasgranulatkörnern weisen eine sehr hohe Temperaturbeständigkeit auf. Zudem sind die Blähglaselemente mit unterschiedlichsten Eigenschaften, insbesondere mit unterschiedlichen Dichten verfügbar, sodass sie entsprechend der vorgesehenen Anwendung der erfindungsgemäßen feuerwiderstehenden Wandung ausgewählt werden können.

Die Blähglaselemente sind bevorzugt durch Blähglaskugeln mit einem Durchmesser zwischen 0,5 mm und 10 mm gebildet. Die Blähglaskugeln weisen eine Schüttdichte zwischen 100 kg/m³ und 300 kg/m³ auf. Über die Wahl der Durchmesser der Blähglaskugeln lassen sich die Eigenschaften der feuerwiderstehenden Wandung einstellen. Beispielsweise ist es vorteilhaft, Blähglaskugeln mit einem kleinen Durchmesser zwischen 0,5 mm und 2 mm mit Blähglaskugeln mit einem großen Durchmesser zwischen 4 mm und 10 mm zu vermischen, um im Ergebnis ein Optimum an Dichte und Wärmedämmung zu erhalten.

Das ausgehärtete anorganische Bindemittel umfasst bevorzugt Netzwerke mineralischer Moleküle. Derartige Netzwerke mineralischer Moleküle gewährleisten einerseits die feste mechanische Verbindung zwischen den Elementen des Leichtzuschlagstoffes, der Innenwand und der Außenwand, und sie weisen andererseits feuerbeständige Eigenschaften auf. Die netzwerkbildenden mineralischen Moleküle umfassen bevorzugt Natriumsilikate und/oder Alumosilikate. Diese chemischen Verbindungen eignen sich besonders als Bindemittel zwischen Blähglaskugeln.

Die Außenwand weist bevorzugt eine geschlossene Oberfläche auf. Auch die Innenwand weist bevorzugt eine geschlossene Oberfläche auf. Die Oberfläche der Außenwand ist bevorzugt wasserdicht ausgeführt. Auch die Oberfläche der Innenwand ist bevorzugt wasserdicht ausgeführt.

Bei einer ersten bevorzugten Ausführungsform der erfindungsgemäßen feuerwiderstehenden Wandung ist diese als Wandsegment ausgeführt, beispielsweise als Wandsegment einer Wand oder einer Wandverkleidung eines Kühlraums, der das Innere eines Hohlkörpers bildet. Das Wandsegment ist bevorzugt als Paneel ausgebildet; bevorzugt mit einer Länge zwischen 1 m und 12 m, mit einer Breite zwischen 0,5 m und 2,0 m und mit einer Dicke zwischen 5 cm und 50 cm. Die Breite beträgt besonders bevorzugt 1,2 m, während die Dicke besonders bevorzugt 20 cm beträgt.

Bei einer zweiten bevorzugten Ausführungsform der erfindungsgemäßen feuerwiderstehenden Wandung bildet diese einen Hohlkörper aus. Die Außenwand ist durch einen Außenhohlkörper gebildet ist, in welchem ein die Innenwand bildender Innenhohlkörper angeordnet ist.

Die erfindungsgemäße feuerwiderstehende Wandung in Form des Hohlkörpers ist bevorzugt durch ein Gehäuse, beispielsweise durch das Gehäuse eines Motors gebildet.

Bei einer besonders bevorzugten Ausführungsform der erfindungsgemäßen feuerwiderstehenden Wandung in Form des Hohlkörpers ist dieser als Rohr oder als Kanal einer Lüftungsanlage oder einer Rauchgasabführungseinrichtung ausgebildet. Der als Rohr oder Kanal ausgeführte Hohlkörper kann beispielsweise der Zuführung von Zuluft oder der Abführung von Abluft dienen. Die erfindungsgemäße feuerwiderstehende Wandung in Form des Hohlkörpers kann der Be- und Entlüftung von Gebäuden, Fahrzeugen und Schiffen oder anderen Hohlräumen dienen.

Bei einer weiteren bevorzugten Ausführungsform ist die erfindungsgemäße feuerwiderstehende Wandung in Form des Hohlkörpers als Rauchgasableitungsrohr einer Rauchgasabführungseinrichtung ausgebildet. Prinzipiell ist die erfindungsgemäße feuerwiderstehende Wandung in Form des Hohlkörper mit beliebigen Dimensionen und Formen ausführbar, beispielsweise mit runden, ovalen, rechteckförmigen, dreieckförmigen oder unregelmäßigen Querschnitten mit Durchmessern bzw. Kantenlängen von einigen Millimetern bis einigen Metern.

Bei einer alternativen bevorzugten Ausführungsform ist die erfindungsgemäße feuerwiderstehende Wandung in Form des Hohlkörpers als Formteil für Rohre oder für Kanäle einer Lüftungsanlage oder einer Rauchgasabführungseinrichtung ausgebildet. Beispielsweise können Fittings durch erfindungsgemäße feuerwiderstehende Wandungen in Form von Hohlkörpern gebildet sein, welche zur Verbindung erfindungsgemäßer Rohre dienen.

Bei einer weiteren alternativen bevorzugten Ausführungsform der erfindungsgemäßen feuerwiderstehenden Wandung in Form des Hohlkörpers ist dieser als Gehäuse für eine Funktionskomponente einer Lüftungsanlage oder einer Rauchgasabführungseinrichtung ausgebildet. Die Funktionskomponente kann beispielsweise durch einen Wärmeübertrager, durch einen Lufterhitzer oder durch einen Ventilator mit Motor gebildet sein. Somit ist es möglich, sämtliche Komponenten einer Lüftungsanlage oder einer Rauchgasabführungseinrichtung, umfassend Rohrstücke bzw. Kanalstücke, Formteile, insbesondere Fittings und Funktionskomponenten sämtlich erfindungsgemäß auszuführen, wodurch die Vorteile der Erfindung an der gesamten Lüftungsanlage bzw. an der gesamten Rauchgasabführungseinrichtung zum Tragen kommen.

Insofern die erfindungsgemäße feuerwiderstehende Wandung in Form des Hohlkörpers als Rohr ausgeführt ist, umfasst dieses bevorzugt ein den Außenhohlkörper bildendes Außenrohr und ein den Innenhohlkörper bildendes Innenrohr. Das Innenrohr und das Außenrohr sind koaxial zueinander angeordnet. Diese Ausführungsform der erfindungsgemäßen feuerwiderstehenden Wandung in Form des Hohlkörpers ist für die meisten aller derjenigen Anwendungen geeignet, bei denen Rohre zur Weiterleitung von Gasen genutzt werden. Jedoch kann die erfindungsgemäße feuerwiderstehende Wandung in Form des Hohlkörpers auch als Kanal, beispielsweise mit einem rechteckigen Profil ausgeführt sein. Dabei weisen bevorzugt der Außenhohlkörper und der Innenhohlkörper jeweils ein rechteckiges Profil auf und sind koaxial zueinander angeordnet.

Das Außenrohr des erfindungsgemäßen Rohres weist bevorzugt einen Durchmesser zwischen 50 mm und 2.000 mm auf, wobei ein Durchmesser des Innenrohres zwischen 30 mm und 200 mm kleiner als der Durchmesser des Außenrohres ist. Diese Ausführungsform des erfindungsgemäßen Rohres ist für viele Lüftungsanlagen und/oder Rauchgasabführungseinrichtungen von Gebäuden geeignet. Bei einer besonders bevorzugten Ausführungsform ist der Durchmesser des Innenrohres 100 mm groß, während der Durchmesser des Außenrohres 220 mm groß ist.

Das Innenrohr und das Außenrohr des erfindungsgemäßen feuerwiderstehenden Rohres bestehen bevorzugt jeweils aus einem nicht brennbaren Material, insbesondere aus einem Metallblech. Das Metallblech des Innenrohres und das Metallblech des Außenrohres weisen bevorzugt jeweils eine Dicke zwischen 0,3 mm und 2,0 mm auf. Die Dicke beträgt besonders bevorzugt 0,6 mm.

Das erfindungsgemäße Verfahren dient der Herstellung einer feuerwiderstehenden Wandung, beispielsweise in Form eines Hohlkörpers zur Weiterleitung von Gasen. Das Verfahren umfasst zunächst einen Schritt, bei welchem eine Innenwand gegenüber einer Außenwand angeordnet wird, beispielsweise indem ein die Innenwand bildender Innenhohlkörper in einem die Außenwand bildenden Außenhohlkörper angeordnet wird, wobei jedenfalls ein Hohlraum zwischen der Außenwand und der Innenwand verbleibt. In einem weiteren Schritt wird eine Mischung umfassend Elemente aus einem aus Blähglas, Blähton und Perlit ausgewählten Leichtzuschlagstoff und ein anorganisches Bindemittel in den Hohlraum eingefüllt. Dabei wird der Hohlraum bevorzugt vollständig gefüllt. In einem weiteren Schritt des erfindungsgemäßen Verfahrens härtet das Bindemittel aus, wodurch die Elemente aus dem Leichtzuschlagstoff miteinander sowie mit der Innenwand und mit der Außenwand fest verbunden werden. Das Aushärten kann beispielsweise durch Zuführung von Wärme beschleunigt werden.

Ein Vorteil des erfindungsgemäßen Verfahrens besteht darin, dass die Wandung, umfassend die Außenwand und die Innenwand, selbst als Form zur Formung der den Leichtzuschlagstoff umfassenden Mischung dient, wobei mit dem Aushärten gleichzeitig eine Befestigung an der Außenwand und an der Innenwand erfolgt. Es sind keine Schritte zur Nachbearbeitung des ausgehärteten Leichtzuschlagstoffes oder zur Befestigung des ausgehärteten Leichtzuschlagstoffes erforderlich. Das erfindungsgemäße Verfahren weist weiterhin den Vorteil auf, dass es für eine Vorfertigung geeignet ist, wodurch es aufwandsarm und unter günstigen Bedingungen durchführbar ist.

Bei einer bevorzugten Ausführungsform des erfindungsgemäßen Verfahrens sind die Elemente aus dem Leichtzuschlagstoff durch Blähglaselemente, insbesondere durch Blähglaskugeln gebildet.

Das anorganische Bindemittel umfasst bevorzugt Wasserglas und mindestens ein Metalloxid. Besonders bevorzugt umfasst das anorganische Bindemittel Natronwasserglas sowie Aluminiumoxid und Siliziumoxid. Dieses Bindemittel eignet sich zur Bildung von Netzwerken mineralischer Moleküle, welche die Elemente aus dem Leichtzuschlagstoff miteinander sowie mit der Außenwand und mit der Innenwand beim Aushärten fest verbinden.

Die durch das erfindungsgemäße Verfahren herzustellende feuerwiderstehende Wandung, insbesondere die Wandung in ihrer Gesamtheit, aber auch die Innenwand, die Außenwand, die Elemente aus dem Leichtzuschlagstoff und das anorganische Bindemittel, die für das erfindungsgemäße Verfahren verwendet werden, weisen bevorzugt auch diejenigen Merkmale auf, wie sie für die erfindungsgemäße feuerwiderstehende Wandung und deren Ausführungsformen angegeben sind.

Weitere Vorteile, Einzelheiten und Weiterbildungen der Erfindung ergeben sich aus der nachfolgenden Beschreibung zweier Ausführungsformen der erfindungsgemäßen feuerwiderstehenden Wandung in Form eines Hohlkörpers, unter Bezugnahme auf die Zeichnung. Es zeigen:
- Fig. 1:: ein Querschnitt einer als Rohr ausgeführten erfindungsgemäßen feuerwiderstehenden Wandung in Form eines Hohlkörpers; und
- Fig. 2:: einen Querschnitt einer als Kanal ausgeführten erfindungsgemäßen feuerwiderstehenden Wandung in Form eines Hohlkörpers.

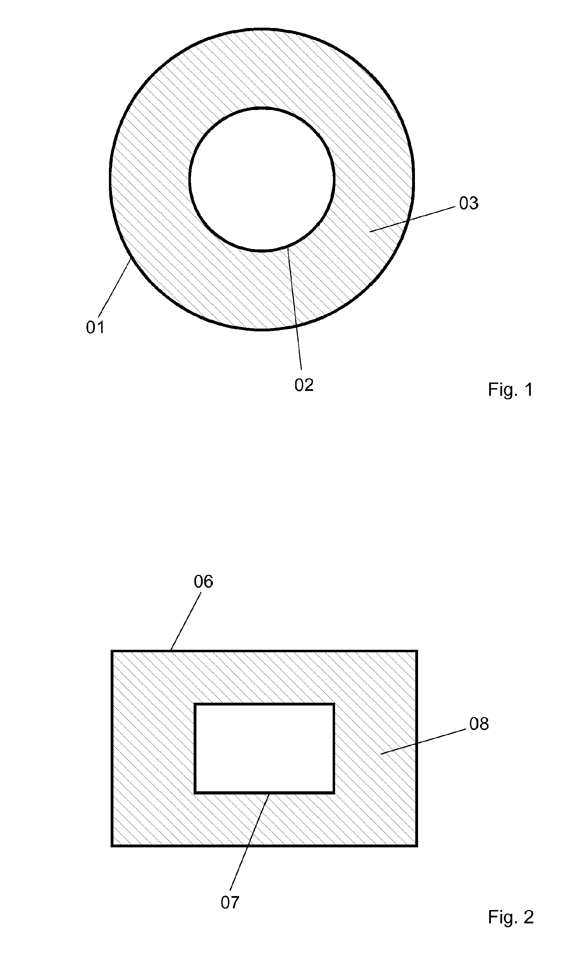

Fig. 1 zeigt einen Querschnitt einer als Rohr ausgeführten erfindungsgemäßen feuerwiderstehenden Wandung in Form eines Hohlkörpers. Das Rohr umfasst ein Außenrohr 01 und ein Innenrohr 02. Das Außenrohr 01 und das Innenrohr 02 bestehen jeweils aus einem korrosionsgeschützen Stahlblech mit einer Dicke von 0,6 mm. Der Durchmesser des Innenrohres 02 beträgt 100 mm. Der Radius des Außenrohres 01 ist 60 mm größer als der Radius des Innenrohres 02, sodass der Durchmesser des Außenrohres 01 220 mm beträgt. Das Außenrohr 01 und das Innenrohr 02 sind koaxial zueinander angeordnet, sodass der Abstand des äußeren Umfanges des Innenrohres 02 zu dem inneren Umfang des Außenrohres 01 konstant ist und bei der gezeigten Ausführung 60 mm beträgt.

Zwischen der äußeren Mantelfläche des Innenrohres 02 und der inneren Mantelfläche des Außenrohres 01 ist ein Zwischenraum 03 ausgebildet, in welchem Blähglaskugeln unterschiedlicher Größe angeordnet sind. In dem Zwischenraum 03 ist weiterhin ein ausgehärtetes anorganisches Bindemittel vorhanden, welches die Blähglaskugeln miteinander sowie mit dem Innenrohr 02 und mit dem Außenrohr 01 fest verbindet.

Das in Fig. 1 gezeigte Rohr kann beispielsweise in einer Lüftungsanlage oder in einer Rauchgasabführungseinrichtung verwendet werden. Das weiterzuleitende Gas, d. h. die Luft bzw. das Rauchgas wird durch den Innenraum des Innenrohres 02 geführt. Das Rohr ist zur Weiterleitung von Gasen geeignet, welche eine Temperatur von bis zu 1.100 °C aufweisen. Die geringe Wärmeleitfähigkeit der Blähglaskugeln bewirkt, dass die Temperatur des Außenrohres 01 wesentlich geringer als die Temperatur des Innenrohres 02 bleibt. Die Blähglaskugeln im Zwischenraum 03 sind nicht brennbar, sodass das erfindungsgemäße Rohr hohen brandschutztechnischen Anforderungen gerecht wird.

Fig. 2 zeigt einen Querschnitt einer als Kanal ausgeführten erfindungsgemäßen feuerwiderstehenden Wandung in Form eines Hohlkörpers. Der Kanal umfasst einen Außenkanal 06 und einen Innenkanal 07. Der Außenkanal 06 und der Innenkanal 07 weisen jeweils ein rechteckförmiges Profil auf. Dabei ist das rechteckförmige Profil des Innenkanals 07 geometrisch ähnlich zu dem rechteckförmigen Profil des Außenkanals 06. Der Innenkanal 07 und der Außenkanal 06 sind koaxial zueinander angeordnet. Der Innenkanal 07 weist bei üblichen Ausführungsformen eine Kantenlänge von bis zu 1.000 mm auf.

Zwischen dem Innenkanal 07 und dem Außenkanal 06 ist ein Zwischenraum 08 ausgebildet, welcher mit Blähglaskugeln gefüllt ist, die durch ein anorganisches Bindemittel zu einem kompakten Füllkörper verbunden sind. Die Blähglaskugeln und das anorganische Bindemittel gleichen den Blähglaskugeln bzw. dem Bindemittel, wie es in dem Zwischenraum 03 des in Fig. 1 gezeigten Rohres vorhanden ist.

Sofern die erfindungsgemäße Wandung nicht als vorgefertigtes Produkt geliefert werden kann, lässt sie sich auch aus Einzelteilen bauseitig zusammenfügen. Dies ist beispielsweise vorn Vorteil, wenn eine Rauchgasabführung in bestehende Gebäude nachträglich integriert werden soll und die baulichen Gegebenheiten spezielle Formgebungen erfordern. Nach Erstellung und Einbau von Innen- und Außenkanal bzw. -rohr kann ein Gemenge aus Blähglaskugeln und noch flüssigem Bindemittel in den verbleibenden Hohlraum eingebracht werden, z. B. durch Einblasen. Nach dem Aushärten des Bindemittels ist der erfindungsgemäße Hohlkörper fertig gestellt.

### Bezugszeichenliste:

- 01: Außenrohr
- 02: Innenrohr
- 03: Zwischenraum
- 04: -
- 05: -
- 06: Außenkanal
- 07: Innenkanal
- 08: Zwischenraum

## Patentansprüche

1. Feuerwiderstehende Wandung, umfassend eine Außenwand (01; 06) und eine gegenüber der Außenwand (01; 06) angeordnete Innenwand (02; 07), wobei zwischen der Außenwand (01; 06) und der Innenwand (02; 07) ein Zwischenraum (03; 08) ausgebildet ist, in welchem Elemente aus einem aus Blähglas, Blähton und Perlit ausgewählten Leichtzuschlagstoff angeordnet sind, die durch ein ausgehärtetes anorganisches Bindemittel miteinander sowie mit der Innenwand (02; 07) und mit der Außenwand (01; 06) fest verbunden sind.

2. Feuerwiderstehende Wandung nach Anspruch 1, **dadurch gekennzeichnet, dass** die Elemente aus dem Leichtzuschlagstoff durch Blähglaskugeln mit einem Durchmesser zwischen 0,5 mm und 10 mm gebildet sind, die eine Schüttdichte zwischen 100 kg/m³ und 300 kg/m³ aufweisen.

3. Feuerwiderstehende Wandung nach Anspruch 1 oder 2,
**dadurch gekennzeichnet, dass** das ausgehärtete anorganische Bindemittel Netzwerke mineralischer Moleküle umfasst.

4. Feuerwiderstehende Wandung nach Anspruch 3, **dadurch gekennzeichnet, dass** die mineralischen Moleküle Natriumsilikate und/oder Alumosilikate umfassen.

5. Feuerwiderstehende Wandung nach einem der Ansprüche 1 bis 4, **dadurch gekennzeichnet, dass** sie als Wandsegment ausgeführt ist.

6. Feuerwiderstehende Wandung nach einem der Ansprüche 1 bis 4, **dadurch gekennzeichnet, dass** sie einen Hohlkörper ausbildet, wobei die Außenwand durch einen Außenhohlkörper gebildet ist, in welchem ein die Innenwand bildender Innenhohlkörper angeordnet ist.

7. Feuerwiderstehende Wandung nach Anspruch 6, **dadurch gekennzeichnet, dass** der Hohlkörper als Rohr oder Kanal einer Lüftungsanlage oder einer Rauchgasabführungseinrichtung ausgebildet ist.

8. Feuerwiderstehende Wandung nach Anspruch 6, **dadurch gekennzeichnet, dass** der Hohlkörper als Formteil für Rohre oder für Kanäle einer Lüftungsanlage oder einer Rauchgasabführungseinrichtung ausgebildet ist.

9. Feuerwiderstehende Wandung nach Anspruch 6, **dadurch gekennzeichnet, dass** der Hohlkörper als Gehäuse für eine Funktionskomponente einer Lüftungsanlage oder einer Rauchgasabführungseinrichtung ausgebildet ist.

10. Feuerwiderstehende Wandung nach Anspruch 7, **dadurch gekennzeichnet, dass** der Hohlkörper als Rohr ausgeführt ist und ein den Außenhohlkörper bildendes Außenrohr (01) und ein den Innenhohlkörper bildendes Innenrohr (02) umfasst, wobei das Innenrohr (02) und das Außenrohr (01) koaxial zueinander angeordnet sind.

11. Feuerwiderstehende Wandung nach Anspruch 10, **dadurch gekennzeichnet, dass** das Außenrohr (01) einen Durchmesser zwischen 50 mm und 1.000 mm aufweist, wobei ein Durchmesser des Innenrohres (02) zwischen 30 mm und 200 mm kleiner als der Durchmesser des Außenrohres (01) ist.

12. Feuerwiderstehende Wandung nach Anspruch 10 oder 11, **dadurch gekennzeichnet, dass** das Innenrohr (02) und das Außenrohr (01) jeweils aus einem Metallblech bestehen.

13. Feuerwiderstehende Wandung nach Anspruch 12, **dadurch gekennzeichnet, dass** das Metallblech des Innenrohres (02) und das Metallblech des Außenrohres (01) jeweils eine Dicke zwischen 0,3 mm und 2,0 mm aufweisen.

14. Verfahren zur Herstellung einer feuerwiderstehenden Wandung; folgende Schritte umfassend:
- Anordnen einer Innenwand (02; 07) gegenüber einer Außenwand (01; 06), wobei ein Hohlraum (03; 08) zwischen der Außenwand (01; 06) und der Innenwand (02; 07) verbleibt;
- Füllen des Hohlraumes (03; 08) mit einer Mischung, umfassend Elemente aus einem aus Blähglas, Blähton und Perlit ausgewählten Leichtzuschlagstoff und ein anorganisches Bindemittel; und
- Aushärten des Bindemittels, um die Elemente aus dem Leichtzuschlagstoff miteinander sowie mit der Innenwand (02; 07) und mit der Außenwand (01; 06) fest zu verbinden.

15. Verfahren nach Anspruch 14, **dadurch gekennzeichnet, dass** das anorganische Bindemittel Wasserglas und mindestens ein Metalloxid umfasst.
